# EUROPEAN PATENT SPECIFICATION

(11) **EP 1 912 449 B1**
(45) Date of publication and mention of the grant of the patent: **23.05.2012**
(21) Application number: 06753040.2
(22) Date of filing: 27.06.2006
(51) Int. Cl.: H04W 8/20

(54) **A METHOD AND APPARATUS FOR SAVING INTERACTING OF WIRELESS TERMINAL USER IDENTIFICATION**
VERFAHREN UND VORRICHTUNG ZUM SICHERN DER INTERAKTION DER BENUTZERIDENTIFIKATION DRAHTLOSER ENDGERÄTE
PROCÉDÉ ET APPAREIL PERMETTANT D ENREGISTRER L INTERACTION D IDENTIFICATION D UTILISATEUR DE TERMINAL SANS FIL

(30) Priority: 29.07.2005 CN 200510088752
(43) Date of publication of application: 16.04.2008
(73) Proprietor: Huawei Technologies Co., Ltd., Longgang District, Shenzhen Guangdong 518129 (CN)
(72) Inventor: SHAN, Mingjun Huawei Administration Building, Shenzhen Guangdong 518129 (CN)
(74) Representative: Thun, Clemens
(86) International application number: PCT/CN2006/001471
(87) International publication number: WO 2007/012247

(56) References cited:
- WO-A1-2004/019640
- CN-A- 1 499 804
- US-A1- 2005 004 982
- US-B1- 6 600 902
- FRANK DAWSON LOTUS DEVELOPMENT CORPORATION: "The vCard v3.0 XML DTD; draft-dawson-vcard-xml-dtd-00.txt" IETF STANDARD-WORKING-DRAFT, INTERNET ENGINEERING TASK FORCE, IETF, CH, 19 July 1998 (1998-07-19), XP015012282 ISSN: 0000-0004
- SPARKS DYNAMICSOFT R: "SIMPLE Presence Document Usage Examples; draft-sparks-simple-pdoc-usa ge-00.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, 17 October 2003 (2003-10-17), XP015035591, ISSN: 0000-0004

## Description

### Field of the Invention

The present invention relates to the wireless communication field, and more particularly to a method and apparatus for the storage and the interaction of the subscriber identifications of the wireless terminals.

### Background of the Invention

The Session Initiation Protocol (SIP) was proposed by the Internet Engineering Task Force (IETF) in the year 1999, which is for realizing the real-time communication based on IP network, especially based on the Internet.

The SIP has developed from supporting the text application to the multimedia and the SIP will become the core control protocol in the next generation network (NGN). The reason the 3rd Generation Partnership Project (3GPP) adopts the SIP to support voice and data is that through providing necessary protocol mechanisms, SIP can guarantee to realize, such as, the subscriber location, subscriber capacity, subscriber availability, call establishment, call processing, call forwarding and number transferring between the terminal system and the agent server.

Currently, the SIP has become the most important application protocol in the mobile network, Internet and NGN, etc. In the wireless network, the services based on SIP mainly include the following:.
the Push to Talk Over Cellular (POC) service (the specification instituted by the Open Mobile Alliance (OMA) for POC is POC 1.0 and the POC 2.0 will come into being soon);
the Presence service based on Simple (the OMA has specified Simple Presence 1.0 and the Presence 2.0 will come into being soon);
the IP phone service, which substitutes H.263 as the initiation protocol for the IP phone call.

In the services based on the SIP, the subscriber identification between the two or more parties is the Universal Resource Indicator (URI) and the basic format is as follows:
URL;TYPE=POC: sip:tom@poc1.com
   tom@poc1.com is similar to the email address, which is identified by the suffix domain name and is unique worldwide.

In the related art, the SIP URI information of the subscriber is generally stored dispersedly and without a uniform store position. For example, in the POC service and SIMPLE/IM service, the SIP URI information is stored in the client software.

The client software can operate in the wireless terminal through embedding or downloading. The embedding means to write the client software in the client terminal and the final subscriber cannot uninstall or reinstall the software; the downloading means to download and install the client software in the terminal for many times. In the development trend of the future services, the download mode will gradually become the mainstream application because of the flexibility and easy update of the downloadable client software.

In the related art, because the SIP URI information doesn't have a uniform store position, if the SIP is only stored in the client software, the SIP URI INFORMATION is prone to be lost when the subscriber updates the software. In addition, when several services based on SIP coexist, the storage and management of the SIP URI INFORMATION are complex. For example, the SIP-URI of the POC service and the SIP-URI of the SIMPLE/PRECENSE service are respectively stored and managed, however, when the POC service and the SIMPLE/PRECENSE service use the same SIP-URI, it is not convenient for the share of the identification. In addition, since the wireless terminals from different vendors lack the uniform interaction mechanism, the wireless terminals based on the SIP cannot exchange the personal SIP URI information conveniently, which influences the communication efficiency between the terminals.

Document (US-B1-6600902) discloses a method of conveying data object to wireless stations through short-range wireless links for use in a wireless system of a type in which wireless links are authorized through matching personal identification codes without tedious and repetitious entering of personal identification codes for individual links. The data object to be conveyed can be a virtual business card vCard, or also virtual calendar information v Calendar, or any other suitable virtual information. In addition, it also discloses that a so-called vCard object in IrOBEX is defining a format of business card that may include a name, telephone and fax number, e-mail addresses, and other types of information.

IETF STANDARD-WORKING-DRAFT document ("The vCard v3.0 XML DTD", FRANK DAWSON LOTUS DEVELOPMENT CORPORATION) defines a [XML] Document Type Definition (DTD) that corresponds to the vCard, electronic business card format defined by [VARD], and the DTD provides equivalent functionality to the standard format defined by [VCARD], in the vCard XML Document Type Definition, the notation and URI for the key or certificate is disclosed.

US2005/004982 discloses a multimedia collaboration system that facilitates more efficient, free-flowing collaboration sessions. In order to make addition of new participants, media components, and or network access device to a collaboration session more efficient, client devices associated with each participant can store endpoint address information that can be automatically obtained by the multimedia collaboration system. The endpoint address information can then be used to add the new participants, media components, and or network access device.

Document IETF STANDARD WORKING DRAFT ("simple presence document usage examples, dynamic soft") 08 october 17, 2003, discloses the possibility of storing a SIP URI in a business card.

### Summary of the Invention

The object of the present invention is to provide a method and apparatus for storage and interaction of subscriber identifications of wireless terminals so as to solve the problem in the related art that the storage modes of the SIP URI information shared by the SIP-based services are not uniform and are not convenient for the exchange and sharing of the SIP URI information.

Based on the above objects, the present invention provides the method for storage and interaction of the subscriber identifications of the wireless terminals, which is applied in the services based on the SIP and the method includes: storing SIP URI information, shared by SIP-based services registered by the wireless terminal, in a wireless electronic name card as content of the card; exchanging the SIP URI information between the wireless terminals or between the wireless terminal and the network side in the format of the wireless electronic name card.

The storage process in the method further includes: storing the SIP URI INFORMATION and an identification of a service corresponding to the SIP URI INFORMATION in the same wireless electronic name card.

The storage process in the method further includes: identifying the wireless electronic name card including the SIP URI INFORMATION according to a predetermined identification.

The wireless electronic name card is a local standard defined electronic card (vCard) and interacts according to exchange technology of the vCard;
or the wireless electronic name card is a Devlnfo and interacts according to exchange technology of the Devlnfo.

The wireless electronic name card is the local standard defined electronic card (vCard);
the storage process includes:
storing the designated identification which represents that the stored information is the SIP URI INFORMATION as the property name of the vCard;
storing the SIP service identification as the vCard parameter; and
storing the SIP URI INFORMATION corresponding to the SIP service as the property value of the vCard.

The interaction process of the SIP URI information in the method includes:
a transmitter transmitting the vCard list to a receiver through the vCard exchange technology;
the receiver searching the vCard list and finding a vCard whose vCard property name corresponds to a designated identification;
selecting the vCard property name and storing it as the SIP URI INFORMATION.

Each wireless terminal only has one SIP URI and all the SIP services registered by the wireless terminal use the same SIP URI; or
each wireless terminal has several SIP URIs and each SIP service registered by the wireless terminal uses a different SIP URI; or
each wireless terminal has several SIP URIs, some SIP services registered by the wireless terminal use different SIP URIs and some SIP services registered by the wireless terminal use the same SIP URI.

An interaction of the wireless electronic name card between the wireless terminals is carried on infrared transmission, blue-tooth transmission or wireless phone network transmission;
An interaction of the wireless electronic name card between the wireless terminal and the network is carried on packet domain data transmission and/or circuit domain data transmission.

The present invention based on the above objects further provides an apparatus for storage and interaction of the subscriber identifications of the wireless terminals, which is applied in the services based on the SIP and the apparatus includes:
a wireless electronic name card function module configured to maintain the local wireless electronic name card list and exchange with the other wireless terminals or with a network side in the format of a wireless electronic name card; and
a card generating module, connected with the wireless electronic name card function module, configured to store SIP URI information, shared by SIP-based services registered by the wireless terminal, in the format of the wireless electronic name card in a wireless electronic name card list in the wireless electronic name card function module.

The apparatus further includes:
a card analyzing module, connected with the wireless electronic name card function module, configured to find the wireless electronic name card including the SIP URI information from the wireless electronic name card information of the other wireless terminals or from the network side received by the wireless electronic name card function module and configured to select the SIP URI information and store it in a SIP URI storage module; and
the SIP URI storage module, connected with the card analyzing module and the card generating module, configured to store the SIP URI information.

The above discussion shows the method and apparatus for storage and interaction of the subscriber identifications of the wireless terminals in the present invention, fully utilizes the mature vCard exchange technology by storing the SIP URI information of the subscriber in the vCard, realizes the personal identification exchange for the subscriber simply and conveniently and improves the efficiency of communication between subscribers.

At the same time, in the present invention, the locally stored electronic cards are copied to the network side and stored there. Once the client software is updated or the terminal is lost, the electronic cards stored at the network side can be copied to the local place and re-obtain the SIP URI information in the cards. Thus, when the client software is updated or the terminal is lost, the terminal identification information will not be lost.

Furthermore, in the present invention, different applications based on the SIP are stored in the same format so that the development complexity of the software is reduced and it is convenient for several services based on the SIP to adopt the unique SIP URI. For example, the POC service and the simple-presence service adopt the same URI.

### Brief Description of the Drawings

Figure 1 is a flow chart showing the process of transmitting a wireless electronic cards between wireless terminals in a method for storage and interaction of subscriber identifications of wireless terminals in the present invention;

Figure 2 is a flow chart showing the process of obtaining a wireless electronic cards by a subscriber from a network side in a method for storage and interaction of the subscriber identifications of wireless terminals in the present invention; and

Figure 3 is a schematic diagram showing the architecture of an apparatus for storage and interaction of subscriber identifications of wireless terminals in the present invention.

### Detailed Description of the Invention

The present invention will be illustrated in detail with reference to the drawings and embodiments.

The present invention provides a method for storage and interaction of subscriber identifications of wireless terminals, which is applied in some services based on a SIP protocol and the method includes: storing SIP URI information in a wireless electronic card as content of the wireless electric card; the SIP URI information interacting between wireless terminals or between the wireless terminals and a network in the form of wireless electronic card. The apparatus includes: a wireless electronic card function module configured to maintain a local wireless electronic card list and realize an exchange of a wireless electronic card with the other wireless terminals or with a network; a card generating module, connected with the wireless electronic card function module, configured to store SIP URI information in the format of the wireless electronic card in the wireless electronic card list in the wireless electronic card function module.

The standard defined wireless electronic card (vCard) is a kind of wireless electronic card specified by the IETF. The wireless terminals such as a mobile phone, a mobile personal computer and a personal data assistant (PDA) which support the vCard can exchange personal information in air through different transmission manners such as infrared, blue-tooth, GPRS and CDMA with the help of the vCard exchanging technology.

The preferred embodiment of the present invention realizes management, backup and exchange between subscribers of the SIP URI information with the help of the current vCard exchanging technology.

Firstly, the SIP URI information is stored according to the vCard format in the local vCard.

The format of the vCard in the related art is as follows:

PropertyName [; PropertyParameters]: PropertyValue

The PropertyName is the propertyname of the vCard, the PropertyParameters are its parameters and the ProperValue is its propertyvalue.

For example, the propertyname "TEL" represents a phone, the PropertyParameters "HOME" means the phone is the home phone and the ProperValue "+1-919-555-1234" represents the phone number.

The SIP URI information is stored in the vCard through the following steps:

(1) setting the propertyname of the vCard which stores the SIP URI information.

A new PropertyName is added to represent the SIP URI information, for example, the SIP_URI as well as other symbol, as long as they are different from the normal electronic card.

In the present invention, the relation between the wireless terminal and the SIP URI may be one-to-one or one-to-many. The wireless terminal may only have one SIP URI and all the SIP services registered by the wireless terminal use the same SIP URI;
or the wireless terminal may have several SIP URIs and each SIP service registered by the wireless terminal uses a different SIP URI; or the wireless terminal may have several SIP URIs, some SIP services registered by the wireless terminal use different SIP URIs and some SIP services use the same SIP URI.

(2) storing the SIP service identifications as the vCard parameters.

Different parameters can be adopted according to different SIP services.

For example, SIMPLE can be the service identification of the Simple service and can be stored in the vCard corresponding to the service as the vCard parameter;

POC can be the service identification of the POC service and POC can be stored in the vCard corresponding to the service as the vCard parameter;

IPPHONE can be the service identification of the IPPHONE service and can be stored in the vCard corresponding to the service as the vCard parameter;

(3) Storing the SIP URI information corresponding to the SIP service as the vCard property value.

For example: the SIP URI information corresponding to a SIP service is:

URL; TYPE=POC: sip:tom@poc1.com

According to the vCard storing format, the URL; TYPE=POC: sip:tom@poc1.comis stored in the property value part of the vCard corresponding to the SIP service.

For example: the normal form of VCARD is:

BEGIN: VCARD

PropertyName [';' PropertyParameters] ':' PropertyValue

END: VCARD

When the SIP URI information is the Objec of the vCard, the exemplary storing formats of different fields are:

PropertyName is SIP_URI

PropertyParameters is POC

_ PropertyValue is sip:tom@poc1.com

The exemplary complete SIP URI information stored in the vCard is as follows:

The exemplary SIP URI information stored in the vCard is:

BEGIN: VCARD

SIP_URI;PoC: sip:tom@poc1.com

..........

END: VCARD

If the wireless terminal only registers one SIP service, one SIP URI information record corresponding to the registered service is to be stored in the local vCard list; if the wireless terminal registers several SIP services at the same time, the SIP URI information records which are of the one to one relation to the registered services are to be stored in the local vCard list.

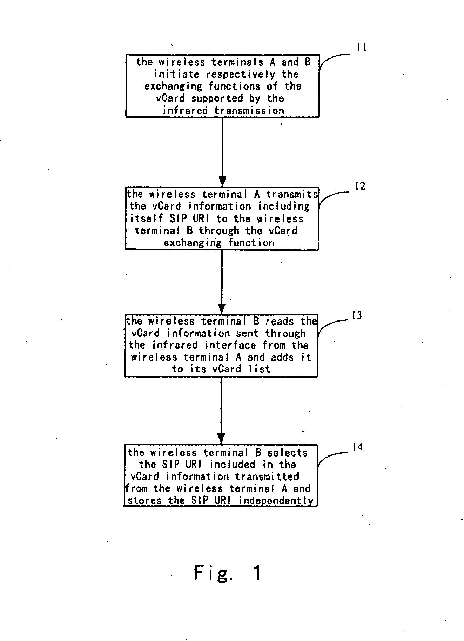

After storing the SIP URI information in the local vCard list, the wireless terminal can transmit it to the other wireless terminals or to the network side with the help of the vCard exchanging technology. As Figure 1 shows, assuming the wireless terminals A and B both support the infrared transmission vCard, the process that the wireless terminal A transmits the locally stored SIP URI information to the wireless terminal B and is as follows:

Step 11, the wireless terminals A and B initiate respectively the exchanging functions of the vCard supported by the infrared transmission.

Step 12, the wireless terminal A transmits the information in the vCard list including the SIP URI of itself to the wireless terminal B through the infrared interface by using the vCard exchanging function;
Or the wireless terminal A transmitting its SIP URI information stored in the vCard list as one vCard information record to the wireless terminal B through the infrared interface by using the vCard exchanging function.

Step 13, the wireless terminal B reads the vCard information sent from the wireless terminal A through the infrared interface and adds the information to its vCard list.

Step 14, the wireless terminal B selects the SIP URI information included in the vCard information transmitted from the wireless terminal A and stores the SIP URI information independently.

The detailed selection of the SIP URI in the step 14 includes: searching for the vCard whose property name is the designated SIP URI identification, for example, searching for the vCard with the property name of SIP_URI and then selecting the property value of the vCard and storing it.

In addition, the whole vCard information whose property name is the designated SIP URI identification can be stored; or the vCard parameter and its property value selected from the vCard can be stored together; or when storing the property values, the services corresponding to the property values can be identified for the wireless terminal which registers several services.

The wireless terminal B stores the selected SIP URI independently so that when it initiates a SIP service call to the wireless terminal A, it can smoothly find the SIP URI information corresponding to the wireless terminal A.

For example, when the wireless terminal B reads the Presence information of the wireless terminal A, the wireless terminal B selects the SIP URI corresponding to the Presence service of the wireless terminal A from the independently stored SIP URIs. For example, the wireless terminal B may select the property value corresponding to "SIMPLE", and then sends a request to the network side, which includes the selected property value as a SIP URI. The related function server at the network side authenticates the validity of the SIP URI. The related function server at the network side authenticates the validity of the SIP URI and sends the Present information of the wireless terminal A to the wireless terminal B.

If the wireless terminal B doesn't store the SIP URI from the wireless terminal A independently, when it initiates a SIP service call to the wireless terminal, it needs to search for the SIP URI corresponding to the wireless terminal A in the locally stored vCard information.

Similarly, the wireless terminal B can send its own SIP URI to the wireless terminal A through the above flow process.

The above transmission of the vCard information between the wireless terminals is not limited to the infrared transmission, which can also be the blue-tooth transmission or the wireless phone network transmission.

In addition, the wireless terminal in the present invention can transmit the locally stored vCard list including the SIP URI to the network side which stores the vCard list, Taking the mobile phone supporting the GPRS as an example, the wireless terminal first initiates a vCard backup service, then reads out the information in the local vCard list through GPRS and transmits the information to the network side through carrier of synchronization mark language (syncML).

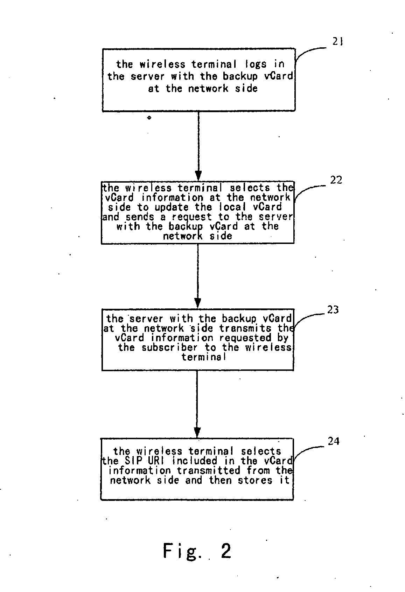

Thus, if the wireless terminal loses the stored electronic card list or the SIP URIs of other wireless terminals, or when the subscriber needs to change the wireless terminal, the backup vCard list information at the network side before can be downloaded to the local terminal and the information in the wireless terminal can be recovered. Please refer to Figure 2 for the specific process, which includes:

Step 21, the wireless terminal logs in the server with the backup vCard at the network side.

Step 22, the wireless terminal selects the vCard information at the network side to update the local vCard and sends a request to the server with the backup vCard at the network side.

Wherein, the requested vCard information can be the local vCard list information formerly backuped at the network side by the subscriber; and also can be the vCard list information backuped at the network side by the other wireless terminal subscribers as long as the subscriber has the corresponding download right.

Step 23, the server with the backup vCard at the network side transmits the vCard information requested by the subscriber to the wireless terminal.

Step 24, the wireless terminal selects the SIP URI included in the vCard information transmitted from the network side and then stores it. The specific selection and storage methods are the same with those in step 14.

The present invention also provides an apparatus for storage and interaction of the subscriber identifications of the wireless terminals according to the aforementioned method.

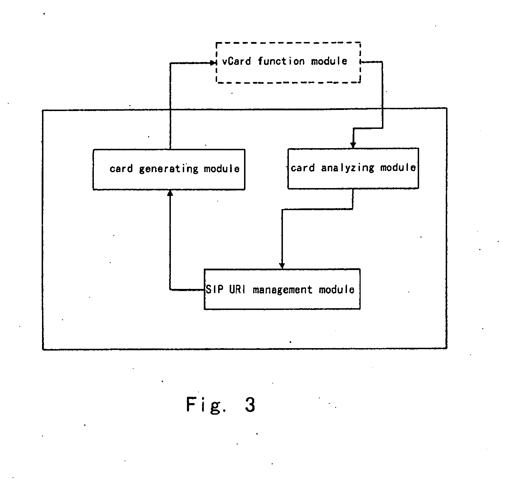

The architecture of the apparatus in the preferred embodiment is shown in Figure 3. The apparatus includes a vCard function module, a card analyzing module, a card generating module and a SIP URI storage module. The card analyzing module, the SIP URI storage module and the card generating module are connected successively. The card generating module and the card analyzing module are connected with the vCard function module respectively.

Wherein, the vCard function module is the one in the wireless terminal that supports and realizes the vCard function, and is mainly configured to maintain the vCard list and realize the exchange of the vCard information with the other wireless terminal or with the network side.

The card generating module unifies the SIP URI of the local or other wireless terminals obtained from the SIP URI storage module into the vCard format and stores them in the vCard function module.

The card analyzing module finds the vCard including the SIP URI from the vCard information of the other wireless terminals or from the network side received by the vCard function module and selects the SIP URI information and stores it in the SIP URI storage module;

The SIP URI storage module stores the SIP URI.

The present invention can be realized in different networks such as the GPRS, WCDMA, CDMA2000 or TD-SCDMA, and the transmission includes but is not limited to the data transmission in the packet domain or the circuit domain.

In addition, the method and apparatus of the present invention are not limited to the vCard technology. For example, the DevInfo of OMA can unify the SIP URI into the DevInfo format and the interactions of SIP URI information between the terminals and between the terminal and the network side can be realized by the DevInfo technology. The detailed method flow and apparatus architecture are similar to those in the vCard solution.

It should be appreciated that the present invention is described as above with reference to the preferred embodiment, which however do not serve as limitations to the invention. It will be apparent to those skilled in the art that various modifications and variations can be made in the present invention. Thus, it is intended that the present invention covers the modifications and variations of this invention provided they come within the scope of the appended claims and their equivalents.

## Claims

1. A method for storage and interaction of a subscriber identification of a wireless terminal, which is applied in a service based on a Session Initiation Protocol, SIP, **characterized by** comprising:
storing (12) a Session Initiation Protocol Universal Resource Indicator, SIP URI, shared by SIP-based services registered by the wireless terminal, in the format of a wireless virtual card in a wireless virtual card list; and
exchanging the SIP URI in the format of a wireless virtual card between wireless terminals;
wherein, the wireless virtual card is a local standard defined virtual card, vCard, and interacts according to exchange technology of the vCard and
the storage step comprises:
storing a designated identification which represents that the stored information is the Session Initiation Protocol Universal Resource Indicator as a property name of the vcard;
storing a Session Initiation Protocol service identification as a parameter of the vcard; and
storing the Session Initiation Protocol Universal Resource Indicator corresponding to
the Session Initiation Protocol service as a property value of the vcard;
wherein, the exchanging step comprises:
a transmitter transmitting a vcard list to a receiver through the exchange technology of the vcard;
the receiver finding the vcard whose property name is the designated identification

2. The method for storage and interaction of a subscriber identification of a wireless terminal according to claim 1, further comprising:
selecting, by the receiver, the SIP URI corresponding to the Presence service of the transmitter from the independently stored SIP URIs when receiver reads the Presence information of the transmitter;
authenticating, by the related function server at the network side, the validity of the SIP URI and sending the Presence information of the transmitter to the receiver.
from the received vCard list ; and
selecting the property value of the obtained vcard and storing it as the Session Initiation Protocol Universal Resource Indicator independently from the vCard list.

3. The method for storage and interaction of a subscriber identification of a wireless terminal according to claim 1, wherein,
the storage step further comprises: identifying the vcard containing the Session Initiation Protocol Universal Resource Indicator according to a predetermined identification.

4. The method for storage and interaction of a subscriber identification of a wireless terminal according to claim 1, wherein,
an Interaction of the vcard between the wireless terminals is carried on infrared transmission, blue-tooth transmission or wireless phone network transmission.

5. An apparatus for storage and interaction of a subscriber identification of a wireless terminal, which is applied in a service based on a Session Initiation Protocol, **characterized by** comprising:
a wireless virtual card function module configured to maintain a local wireless virtual card list and exchange it with other wireless terminals in the format of a wireless virtual card;
a card generating module configured to connect with the wireless virtual card function module, and store a Session Initiation Protocol Universal Resource Indicator, SIP URI, shared by SIP-based services registered by the wireless terminal, in the format of the wireless virtual card in the wireless virtual card list of the wireless virtual card function module;
a card analyzing module configured to connect with the wireless virtual function module, and find the wireless virtual card including the Session Initiation Protocol Universal Resource Indicator from the wireless virtual card information of the other wireless terminals received by the wireless virtual card function module and select the Session Initiation Protocol Universal Resource Indicator and store it in a SIP URI storage module independently from the vCard list ; and
the SIP URI storage module connected with the card analyzing module and the card generating module, configured to store the SIP URI;
wherein, the wireless virtual card is a local standard defined virtual card, vCard, and interacts according to exchange technology of the vCard and
wherein the SIP URI is stored according to the vCard format in the local vCard list, the storing the SIP URI further comprises:
storing a designated identification which represents that the stored information is the Session Initiation Protocol Universal Resource Indicator as a property name of the vcard;
storing a Session Initiation Protocol service identification as a parameter of the vcard; and
storing the Session Initiation Protocol Universal Resource Indicator corresponding to the Session Initiation Protocol service as a property value of the vcard.

6. The apparatus for storage and interaction of a subscriber identification of a wireless terminal according to claim 5, wherein,
an interaction of the vcard between the wireless terminals is carried on infrared transmission, blue-tooth transmission or wireless phone network transmission.

## Patentansprüche

1. Verfahren zum Speichern und Interagieren von einer Teilnehmerkennung eines drahtlosen Endgeräts, das in einem Dienst verwendet wird, der auf einem Sitzungsinitiierungsprotokoll, SIP, beruht, **gekennzeichnet dadurch, dass** es Folgendes umfasst:
Speichern (12) eines Sitzungsinitiierungsprotokoll-Universalbetriebsmittelindikators,
SIP URI, der von SIP-basierten Diensten, die von dem drahtlosen Endgerät registriert werden, gemeinsam genutzt wird, im Format einer drahtlosen virtuellen Karte in einer Liste drahtloser virtueller Karten; und
Austauschen des SIP URI im Format einer drahtlosen virtuellen Karte zwischen drahtlosen Endgeräten;
wobei die drahtlose virtuelle Karte eine gemäß einem lokalen Standard definierte virtuelle Karte, vCard, ist und in Übereinstimmung mit einer Austauschtechnologie der vCard interagiert und
der Speicherschritt Folgendes umfasst:
Speichern einer bezeichneten Kennung, die repräsentiert, dass die gespeicherten Informationen der Sitzungsinitiierungsprotokoll-Universalbetriebsmittelindikator sind,
als einen Eigennamen der vCard;
Speichern einer Sitzungsinitiierungsprotokoll-Dienstkennung als einen Parameter der vCard; und
Speichern des Sitzungsinitiierungsprotokoll-Universalbetriebsmittelindikators, der dem Sitzungsinitiierungsprotokoll-Dienst entspricht, als einen Eigentumswert der vCard;
wobei der Austauschschritt Folgendes umfasst:
ein Sender sendet eine vCard-Liste über die Austauschtechnologie der vCard zu einem Empfänger;
der Empfänger findet die vCard, deren Eigenname die bezeichnete Kennung ist, in der empfangenen vCard-Liste; und
Wählen des Eigentumswerts der erhaltenen vCard und Speichern dieses Werts unabhängig von der vCard-Liste als den Sitzungsinitiierungsprotokoll-Universalbetriebsmittelindikator.

2. Verfahren zum Speichern und Interagieren von einer Teilnehmerkennung eines drahtlosen Endgeräts nach Anspruch 1, das ferner Folgendes umfasst:
Auswählen durch den Empfänger des SIP URI, der dem Präsenzdienst des Senders entspricht, aus den unabhängig gespeicherten SIP URIs, wenn der Empfänger die Präsenzinformationen des Senders liest;
Authentifizieren durch den damit in Beziehung stehenden Funktionsserver auf der Netzseite der Gültigkeit des SIP URI und Senden der Präsenzinformationen des Senders zu dem Empfänger.

3. Verfahren zum Speichern und Interagieren von einer Teilnehmerkennung eines drahtlosen Endgeräts nach Anspruch 1, wobei
der Speicherschritt ferner Folgendes umfasst: Identifizieren der vCard, die den Sitzungsinitiierungsprotokoll-Universalbetriebsmittelindikator enthält, in Übereinstimmung mit einer vorgegebenen Kennung.

4. Verfahren zum Speichern und Interagieren von einer Teilnehmerkennung eines drahtlosen Endgeräts nach Anspruch 1, wobei
eine Interaktion der vCard zwischen den drahtlosen Endgeräten mittels Infrarotübertragung, Bluetooth-Übertragung oder Drahtlostelephon-Netzübertragung erfolgt.

5. Vorrichtung zum Speichern und Interagieren von einer Teilnehmerkennung eines drahtlosen Endgeräts, die in einem Dienst verwendet wird, der auf einem Sitzungsinitiierungsprotokoll beruht, **gekennzeichnet dadurch, dass** sie Folgendes umfasst:
ein Funktionsmodul für drahtlose virtuelle Karte, das konfiguriert ist, eine lokale Liste drahtloser virtueller Karten zu halten und sie mit anderen drahtlosen Endgeräten im Format einer drahtlosen virtuellen Karte auszutauschen;
ein Kartenerzeugungsmodul, das konfiguriert ist, mit dem Funktionsmodul für drahtlose virtuelle Karte verbunden zu werden und einen Sitzungsinitiierungsprotokoll-Universalbetriebsmittelindikator, SIP URI, der von SIP-basierten Diensten, die durch das drahtlose Endgerät registriert werden, gemeinsam genutzt wird, im Format der drahtlosen virtuellen Karte in der Liste drahtloser virtueller Karten des Funktionsmoduls für drahtlose virtuelle Karte zu speichern;
ein Kartenanalysemodul, das konfiguriert ist, mit dem Funktionsmodul für drahtlose virtuelle Karte verbunden zu werden und die drahtlose virtuelle Karte, die den Sitzungsinitiierungsprotokoll-Universalbetriebsmittelindikator enthält, unter den Informationen über drahtlose virtuelle Karten der anderen drahtlosen Endgeräte, die von dem Funktionsmodul für drahtlose virtuelle Karte empfangen werden, zu suchen und
den Sitzungsinitiierungsprotokoll-Universalbetriebsmittelindikator zu wählen und ihn unabhängig von der vCard-Liste in einem SIP URI-Speichermodul zu speichern; und das SIP URI-Speichermodul, das mit dem Kartenanalysemodul und mit dem Kartenerzeugungsmodul verbunden ist und konfiguriert ist, den SIP URI zu speichern;
wobei die drahtlose virtuelle Karte eine gemäß dem lokalen Standard definierte virtuelle Karte, vCard, ist und in Übereinstimmung mit der Austauschtechnologie der vCard interagiert; und
wobei der SIP URI in Übereinstimmung mit dem vCard-Format in der lokalen vCard-Liste gespeichert ist, wobei das Speichern des SIP URI ferner Folgendes umfasst:
Speichern einer bezeichneten Kennung, die repräsentiert, dass die gespeicherten Informationen der Sitzungsinitiierungsprotokoll-Universalbetriebsmittelindikator sind,
als einen Eigennamen der vCard;
Speichern einer Sitzungsinitiierungsprotokoll-Dienstkennung als einen Parameter der vCard; und
Speichern des Sitzungsinitiierungsprotokoll-Universalbetriebsmittelindikators, der dem Sitzungsinitiierungsprotokoll-Dienst entspricht, als einen Eigentumswert der vCard.

6. Vorrichtung zum Speichern und Interagieren von einer Teilnehmerkennung eines drahtlosen Endgeräts nach Anspruch 5, wobei
eine Interaktion der vCard zwischen den drahtlosen Endgeräten mittels Infrarotübertragung, Bluetooth-Übertragung oder Drahtlostelephon-Netzübertragung erfolgt.

## Revendications

1. Procédé de mémorisation et d'interaction d'une identification d'abonné d'un terminal sans fil, lequel est appliqué dans un service selon un Protocole de Lancement de Session, SIP, **caractérisé en ce qu'**il comprend :
la mémorisation (12) d'un Indicateur de Ressources Universelles, URI, de Protocole de Lancement de Session SIP, ou SIP URI, partagé par des services SIP enregistrés par le terminal sans fil, sous le format d'une carte virtuelle sans fil dans une liste de cartes virtuelles sans fil ; et
l'échange du SIP URI sous le format d'une carte virtuelle sans fil entre des terminaux sans fil ;
dans lequel la carte virtuelle sans fil est une carte virtuelle locale définie de manière standard, vCard, et interagit selon une technologie d'échange de la vCard et
l'étape de mémorisation comprend :
la mémorisation d'une identification désignée qui indique que les informations mémorisées sont l'Indicateur de Ressources Universelles de Protocole de Lancement de Session comme nom de propriété de la vCard ;
la mémorisation d'une Identification de service de Protocole de Lancement de Session comme paramètre de la vCard; et
la mémorisation de l'Indicateur de Ressources Universelles de Protocole de Lancement de Session correspondant au service de Protocole de Lancement de Session comme valeur de propriété de la vCard ;
dans lequel l'étape d'échange comprend :
un émetteur transmettant une liste de vCards à un récepteur par la technologie d'échange de la vCard,
le récepteur trouvant la vCard dont le nom de propriété est l'identification désignée à partir de la liste de vCards reçue ; et
la sélection de la valeur de propriété de la vCard obtenue et sa mémorisation en tant qu'Indicateur de Ressources Universelles de Protocole de Lancement de Session,
indépendamment parmi la liste de vCards.

2. Procédé de mémorisation et d'interaction d'une identification d'abonné d'un terminal sans fil selon la revendication 1, comprenant en outre :
la sélection, par le récepteur, du SIP URI correspondant au service de Présence de l'émetteur parmi les SIP URI mémorisés indépendamment quand le récepteur lit les informations de Présence de l'émetteur ;
l'authentification, par le serveur de fonction associé côté réseau, de la validité du SIP URI et l'envoi des informations de Présence de l'émetteur au récepteur.

3. Procédé de mémorisation et d'interaction d'une identification d'abonné d'un terminal sans fil selon la revendication 1, dans lequel
l'étape de mémorisation comprend en outre : l'identification de la vCard contenant l'Indicateur de Ressources Universelles de Protocole de Lancement de Session selon une identification prédéterminée.

4. Procédé de mémorisation et d'interaction d'une identification d'abonné d'un terminal sans fil selon la revendication 1, dans lequel
une interaction de la vCard entre les terminaux sans fil est effectuée par transmission infrarouge, transmission Bluetooth ou transmission par réseau téléphonique sans fil.

5. Appareil de mémorisation et d'interaction d'une identification d'abonné d'un terminal sans fil, lequel est appliqué dans un service selon un Protocole de Lancement de Session, **caractérisé en ce qu'**il comprend :
un module à fonction de carte virtuelle sans fil configuré pour tenir à jour une liste de cartes virtuelles sans fil locales et l'échanger avec d'autres terminaux sans fil sous le format d'une carte virtuelle sans fil ;
un module de génération de carte configuré pour se connecter au module à fonction de carte virtuelle sans fil, et mémoriser un Indicateur de Ressources Universelles de Protocole de Lancement de Session, ou SIP URI, partagé par des services SIP enregistrés par le terminal sans fil, sous le format de la carte virtuelle sans fil dans la liste de cartes virtuelles sans fil du module à fonction de carte virtuelle sans fil ;
un module d'analyse de carte configuré pour se connecter au module à fonction virtuelle sans fil, et trouver la carte virtuelle sans fil comportant l'Indicateur de Ressources Universelles de Protocole de Lancement de Session parmi les informations de carte virtuelle sans fil des autres terminaux sans fil reçues par le module à fonction de carte virtuelle sans fil et sélectionner l'Indicateur de Ressources Universelles de Protocole de Lancement de Session et le mémoriser dans un module de mémorisation de SIP URI indépendamment parmi la liste de vCards ; et
le module de mémorisation de SIP URI connecté au module d'analyse de carte et au module de génération de carte, configuré pour mémoriser le SIP URI ;
dans lequel la carte virtuelle sans fil est une carte virtuelle locale définie de manière standard, vCard, et interagit selon une technologie d'échange de la vCard et
dans lequel le SIP URI est mémorisé en fonction du format vCard dans la liste locale de vCards ; la mémorisation du SIP URI comprenant en outre :
la mémorisation d'une identification désignée qui indique que les informations mémorisées sont l'Indicateur de Ressources Universelles de Protocole de Lancement de Session comme nom de propriété de nom de la vCard ;
la mémorisation d'une identification de service de Protocole de Lancement de Session comme paramètre de la vCard ; et
la mémorisation de l'Indicateur de Ressources Universelles de Protocole de Lancement de Session correspondant au service de Protocole de Lancement de Session comme valeur de propriété de la vCard.

6. Appareil de mémorisation et d'interaction d'une identification d'abonné d'un terminal sans fil selon la revendication 5, dans lequel
une interaction de la vCard entre les terminaux sans fil est effectuée par transmission infrarouge, transmission Bluetooth ou transmission par réseau téléphonique sans fil.
